# EUROPÄISCHE PATENTANMELDUNG

(11) **EP 3 901 535 A1**
(43) Veröffentlichungstag der Anmeldung: **27.10.2021**
(21) Anmeldenummer: 21169935.0
(22) Anmeldetag: 22.04.2021
(51) Int. Cl.: F25B 15/00

(54) **WÄRMETAUSCHVORRICHTUNG MIT SORPTIONSEINRICHTUNG**

(30) Priorität: 23.04.2020 DE 102020205166
(71) Anmelder: Bayerisches Zentrum für Angewandte Energieforschung e. V., 97074 Würzburg (DE)
(72) Erfinder: Gurtner, Richard, 85540 Haar (DE); Riepl, Manuel, 85478 Garching (DE); Helm, Martin, 80687 München (DE); Wuschig, Christian, 80798 München (DE)
(74) Vertreter: Winter, Brandl - Partnerschaft mbB

(57) **Zusammenfassung**

Es wird eine effektive Wärmetauschvorrichtung zur Nutzung von Wärmequellen mit unterschiedlichen Temperaturniveaus und zur Bereitstellung von Nutzwärme auf einem bestimmten Temperaturniveau angegeben. Durch den Einsatz einer einstufigen Sorptionswärmepumpe bestehend aus einem Generator (G1), einem Kondensator (C1), einem Absorber (A0) und einem Verdampfer (E0) kann die latente Wärme in einem Abgasstrom (26) nutzbar gemacht werden. Angetrieben wird die Sorptionswärmepumpe durch den Generator (G1) durch die Nutzung der im Abgas (26) enthaltenen sensiblen Wärme. Die durch den Verdampfer (E0) aufgenommene Wärme dient zur weiteren Abkühlung des Abgases (26) und insbesondere zur Rauchgaskondensation. Die Abkühlung des Abgases (26) geschieht durch einen weiteren zur Rauchgaskondensation geeigneten Wärmetauscher (WT2). Der Verdampfer (E0) und der Wärmetauscher (WT2) zur Rauchgaskondensation sind zu diesem Zweck durch einen hydraulischen Kreis (28) miteinander verbunden. Die durch den Generator (G1) und Verdampfer (E0) aufgenommen Wärme wird durch den Kondensator (C1) und den Absorber (A0) als Nutzwärme bereitgestellt. Die Wärmetauscherflächen im Generator (G1) sind so gewählt, dass ausreichend Kältemittel ausgetrieben wird, um die notwendige Verdampferleistung im Verdampfer (E0) bereitstellen zu können. Durch eine Steuereinrichtung zum Justieren der Verdampferleistung kann diese feinjustiert bzw. bedarfsgerecht eingestellt werden

## Beschreibung

Die vorliegende Offenbarung betrifft eine Wärmetauschvorrichtung mit einer Sorptionswärmepumpe zur Nutzung von Wärmequellen mit unterschiedlichen Temperaturniveaus und zur Bereitstellung von Nutzwärme auf einem bestimmten Temperaturniveau nach Anspruch 1.

Sorptionswärmepumpen sind bekannt und bestehen immer aus den Hauptkomponenten Ab- oder Adsorber, Verdampfer, Generator und Kondensator. Der Antrieb des Generators erfolgt über ein Wärmeträgermedium auf hohem Temperaturniveau. Wärme auf niedrigem Temperaturniveau wird durch den Verdampfer über einen Kältekreis aufgenommen und auf mittlerem Temperaturniveau durch die Komponenten Kondensator und Ab-/Adsorber zusammen mit der Antriebswärme an den Heizkreis abgegeben. Das so erzielbare Wärmeverhältnis COP (Verhältnis zwischen Heizwärme und Antriebswärme) einer einstufigen Sorptionswärmepumpe liegt im Bereich von 1,7.

Durch den Wärmeeintrag im Generator wird das Kältemittel aus dem Sorbens desorbiert. Dieser Kältemitteldampf wird unter Wärmeabgabe an den Heizkreis im Kondensator verflüssigt und als Kondensat durch einen Kältemittelsumpf aufgefangen. Von dort wird das Kältemittelkondensat in den Verdampfer geleitet. Dort verdampft das Kältemittel durch Zufuhr von Wärme aus dem externen Kältekreis. Der Dampf strömt zum Ab-/Adsorber und wird dort durch das Sorbens ab- oder adsorbiert. Die dabei freiwerdende Wärme wird an den Heizkreis abgegeben.

Die WO 2016066153 A1 offenbart eine Heizungsanlage, umfassend einen zentralen Wärmeerzeuger zur Erzeugung thermischer Energie aus der Verbrennung von fossilen oder Biomasse-Brennstoffen, wobei bei der Verbrennung Abgas entsteht; einen Verdampfer zum Verdampfen eines Kältemittels, wobei der Verdampfer kommunikativ mit einer Abgasleitung des zentralen Wärmeerzeugers verbunden ist (Brennwertnutzung), so dass die zum Verdampfen des Kältemittels benötigte Energie dem Abgas des zentralen Wärmeerzeugers entnommen werden kann.

Die EP 2937644 A1 offenbart ein brennstoffbetriebenes Heizgerät mit einem Brenner und einem Abgaswärmetauscher, vorzugsweise Kondensationsabgaswärmetauscher, zum Abkühlen der Abgase des Brenners und Übertragung auf einen Heizkreislauf und / oder Brauchwasser, sowie einer Abgasleitung zum Abführen der Abgase von dem Abgaswärmetauscher in die Umgebung, vorzugsweise zum Abführen über einen Kamin, wobei die Abgasleitung stromab des Abgaswärmetauschers mit einem Verdampfer einer Kompressionswärmepumpe wärmeleitend verbunden ist. Hierzu ist in der Abgasleitung stromab des Abgaswärmetauschers ein Abgasleitungswärmetauscher angeordnet, welcher über einen flüssigkeitsführenden Kreislauf mit einem Pufferspeicher verbunden ist und dieser Pufferspeicher wärmeleitend mit dem Verdampfer der Kompressionswärmepumpe verbunden ist.

DE 202013010117 U1 offenbart eine Heizungsanlage mit Abgaswärmenutzung. Vorgesehen sind zwei Brennwert-Wärmeübertrager im Abgasstrom. Diese sind über einen primären Versorgungskreis und einen Pufferspeicher mit einem sekundären Versorgungskreis verbunden, der seinerseits mit einem Verdampfer 18 verbunden ist.

DE 2528736 A1 offenbart eine Absorber- oder Dampfstrahl-Wärmepumpe mit thermischer Heizenergie, insbesondere zur Aufheizung eines Mediums auf vergleichsweise niedrige Temperatur, dadurch gekennzeichnet, dass das Heizmedium nach dem Durchlauf durch den Kocher einen oder nacheinander mehrere Wärmeübertrager bzw. Verflüssiger oder Verdampfer durchströmt, wo es weitere Energie an das aufzuheizende Medium und/oder die heißen oder kalten Kreislaufmedien und/oder das wärmeabgebende, kalte Medium abgibt.

US 20170307264 A1 offenbart ein Verfahren zur Rückgewinnung von Wärmeenergie einer motorgetriebenen Wärmepumpe. Bei diesem wird u.a. die latente Wärme des Abgasstromes über einen Wärmetauscher und einen Kreislauf einem Wärmegenerator zugeführt. Vorgesehen ist eine Steuerung, die die Drehzahl der Wärmekraftmaschine derart moduliert, dass die Kälteleistung der Verbrennungsleistung numerisch überlegen ist.

DE 19544452 A1 offenbart ein Verfahren zur Nutzung der Rauchgaskondensationswärme, wobei die Rauchgase in einem "Brennwertwärmetauscher" kondensiert werden und das vorgewärmte Wärmeübertragungsmedium (Wasser, Sole, Öl, Kältemittel) als Wärmequelle einer Wärmepumpe zugeführt wird.

DE 3113417 A1 offenbart eine Heizungsanlage mit einer Absorptionswärmepumpe. Im Abgasweg sind hinter dem Austreiber vorzugsweise zwei Wärmetauscher zur Nutzung der Abgaswärme einschließlich der Kondensationswärme angeordnet.

EP 1391668A2 offenbart eine ein- oder mehrstufige Sorptionskältewärmepumpe mit Wasser als Arbeitsmedium bei der die Verdampferleistung das flüssige Arbeitsmedium gegebenenfalls nur teilweise dem Verdampfer zugeführt wird, um ein Vereisen des Verdampfers zu verhindern.

Aus der US 4803958 A und der DE 10308585 A1 ist eine Sorptionswärmepumpe bekannt, die durch die in Rauchgasen enthaltene Abwärme angetrieben wird. In der DE 10308585 A1 werden die Rauchgase noch zusätzlich gereinigt.

Aus der DE 19650183 A1 ist es bekannt, die Abwärme eines BHKW zum Antrieb einer Sorptionswärmepumpe zu nutzen.

Die im Wasserdampf des Abgases enthaltene latente Wärme (Kondensationswärme) beträgt z.B. bei Erdgasfeuerungen ca. 10% der im Abgas enthaltenen sensiblen Wärme. Ein Großteil dieser sensiblen Wärme kann zum Antrieb der Sorptionswärmepumpe genutzt werden. Hierdurch könnte jedoch deutlich mehr Wärme auf niedrigem Temperaturniveau durch den Verdampfer aufgenommen werden, als an latenter Wärme zur Verfügung steht. Diese Randbedingung ist trotz variierendem Anteil an latenter Wärme grundsätzlich bei allen betrachteten Wärmequellen als Antrieb für die Sorptionswärmepumpe gegeben. Aus der DE102018217935A1, die Stand der Technik nach §3(2) PatG darstellt, ist eine Wärmetauschvorrichtung mit einer Sorptionseinrichtung bekannt, die Wärmequellen mit unterschiedlichen Temperaturniveaus nutzt, um Nutzwärme auf einem bestimmten Temperaturniveau bereitzustellen.

Ein Blockheizkraftwerk (BHKW) stellt gleichzeitig Wärme auf vorbestimmten Temperaturniveaus und Strom zur Verfügung. Die Wärme wird durch das Abgas des BHKW bei hohen Temperaturen (bis über 500°C) sowie durch einen Kühlwasserkreis bei niedrigeren Temperaturen (bis zu 90°C) abgegeben. Abnehmer der Wärme ist häufig ein Heizkreis. Dieser ist in der Regel identisch zum Kühlwasserkreis des BHKW. Für die Nutzbarmachung der Abgaswärme ist ein Abgaswärmetauscher notwendig. Dieser ermöglicht es die im Abgas befindliche Wärme auf den Heizkreis zu tauschen und so nutzbar zu machen. Die Abgastemperatur am Austritt des Abgaswärmetauschers ist stets höher als die der Eintrittstemperatur des Heizkreises in den Abgaswärmetauscher. Diese liegt häufig über 50°C. Eine Abkühlung des Abgases bis in den Kondensationsbereich ist daher häufig nicht möglich (Brennwertnutzung).

Aus der DE 36 86 731 T2 und der DE 30 18 705 A1 sind jeweils Wärmepumpen bekannt, bei der ein Heizungswärme erzeugender Brenner zugleich Generator einer Sorptionswärmepumpe mit Verdampfer, Kondensator und Absorber ist. Die Wärme aus Kondensator und Absorber wird zusätzlich in den Heizkreislauf eingekoppelt. Weiter ist es bekannt, sensible und auch latente Wärme aus dem Abgasstrom des Brenners in den Verdampfer der Sorptionswärmepumpe einzukoppeln. Die Verdampferleistung lässt sich mittels einer Steuereinrichtung grob beeinflussen. Eine genaue Anpassung der Verdampferleistung an die im Rauchgasstrom enthaltene Abwärme ist kaum möglich.

Aufgabe der vorliegenden Erfindung ist es daher, eine Wärmetauschvorrichtung mit Sorptionseinrichtung zur Nutzung von Wärmequellen mit unterschiedlichen Temperaturniveaus und zur Bereitstellung von Nutzwärme auf einem bestimmten Temperaturniveau anzugeben, bei der sich die Verdampferleistung der Sorptionseinrichtung unabhängig von der im Abgas zum Antrieb zur Verfügung stehenden Wärme auf eine bestimmte im Abgas enthaltene Abwärme anpassen lässt.

Die Lösung dieser Aufgabe erfolgt durch die Merkmale des Anspruchs 1.

Durch den Einsatz einer einstufigen Sorptionswärmepumpe bestehend aus einer Generatoreinrichtung, einer Kondensatoreinrichtung, einer Sorptionseinrichtung und einer Verdampfereinrichtung kann die latente und sensible Wärme im Abgasstrom nutzbar gemacht werden. Angetrieben wird die Sorptionswärmepumpe durch die Generatoreinrichtung durch die Nutzung der im Abgas enthaltenen sensiblen Wärme. Die durch die Verdampfereinrichtung aufgenommene Wärme dient zur weiteren Abkühlung des Abgases und insbesondere zur Rauchgaskondensation (Brennwertnutzung). Die Abkühlung des Abgases geschieht durch einen weiteren zur Rauchgaskondensation geeigneten Wärmetauscher. Die Verdampfereinrichtung und der Wärmetauscher zur Rauchgaskondensation sind zu diesem Zweck thermisch z.B. durch einen hydraulischen Kreis miteinander verbunden. Die durch die Generatoreinrichtung und die Verdampfereinrichtung aufgenommen Wärmen werden durch die Kondensatoreinrichtung und die Sorptionseinrichtung als Nutzwärme bereitgestellt. Die Wärmetauscherflächen in der Generatoreinrichtung sind so gewählt, dass so viel Wärme aufgenommen wird, damit ausreichend Kältemittel erzeugt werden kann, um die notwendige Verdampferleistung bereitstellen zu können. Die Generatoreinrichtung kühlt das Abgas nicht vollständig ab, daher ist weiterhin der Abgaswärmetauscher im Heizkreis notwendig. Durch den Einsatz der Sorptionswärmepumpe kann die durch die Wärmetauschvorrichtung bereitgestellte Nutzwärme gesteigert werden ohne dass am BHKW zusätzliche Energie eingesetzt werden müsste.

Die durch die Dimensionierung der Wärmetauscherflächen der Generatoreinrichtung zur Verfügung stellbare Verdampferleistung wird durch eine Steuereinrichtung zum Justieren der Verdampferleistung bedarfsgerecht eingestellt. Die Wärmeübertragerflächen in der Generatoreinrichtung werden so dimensioniert, dass die anfallende Abwärme auf jeden Fall durch die Verdampfereinrichtung aufgenommen werden kann. Steht der Verdampfereinrichtung mehr Verdampferleistung zur Verfügung als Abwärme vorhanden ist oder soll weniger Abwärme durch die Verdampfereinrichtung aufgenommen werden, so wird die Verdampferleistung nachgeregelt.

Dieses Justieren oder Nachregeln erfolgt nach Anspruch 2 über eine Kondensatrückführung aus dem Kondensator in den Generator und/oder den Absorber und/oder durch eine Kondensatrückführung aus dem Verdampfer in den Absorber und/oder durch einen Lösungskühler der die Lösung des Generators gegen den Heizkreis kühlt und dadurch dem Generator Wärme entzieht, die dann nicht mehr zur Kältemittelerzeugung zur Verfügung steht. Die Art der Regelung der Verdampferleistung durch eine Kondensatrückführung ist in der DE102018217935A1 ausführlich beschrieben und es wird daher auf die dortige Offenbarung vollinhaltlich Bezug genommen. Der Lösungskühler besteht aus einem Wärmetauscher der die Abkühlung der Lösung gegen den Heizkreis ermöglicht.

Durch die Verschaltung der verschiedenen Wärmetauscher gemäß Anspruch 3 wird die im Abgasstrom enthaltene Wärme auf dem jeweiligen Temperaturniveau optimal genutzt.

Durch die Nutzung einer dritten Wärmequelle nach Anspruch 4 wird die Effizienz der Wärmetauschvorrichtung zusätzlich erhöht.

Durch die zusätzliche Aufnahme von Wärme aus dem Abgas durch den Generator nach Anspruch 5 kann die erste Wärmetauscheinrichtung kleiner ausgeführt werden.

Wenn die Abwärmen eines BHKW genutzt werden, ist diese dritte Wärmequelle der Gemischkühler des BHKW. Durch die Kühlung des Brennstoff/Luft-Gemisches im Gemischkühler wird Abwärme genutzt und der elektrische Wirkungsgrad und die elektrische Leistung des BHKW erhöht - Anspruch 6.

Wenn die Abwärmen eines BHKW genutzt werden, ist die erste Wärmequelle der Abgasstrom des BHKW - Anspruch 7.

Wenn die Abwärmen eines BHKW genutzt werden, ist die zweite Wärmequelle der Motorkühlkreis des BHKW - Anspruch 8.

Weitere Einzelheiten, Merkmal und Vorteile der Erfindung ergeben sich aus der nachfolgenden Beschreibung verschiedener Ausführungsformen der Erfindung.
Fig. 1 zeigt eine schematische Darstellung einer einstufigen Sorptionswärmepumpe im p-T-Diagramm inklusive Steuereinrichtung zum Justieren der Verdampferleistung der ersten Verdampfereinrichtung (E0) durch einen Lösungskühler (LK) zum Kühlen der Lösung der Generatoreinrichtung (G1) gegen den Heizkreis (24);
Fig. 2 zeigt ein Schaltbild einer ersten Ausführungsform der Erfindung mit einer Sorptionswärmepumpe nach Fig. 1; und
Fig. 3 zeigt ein Schaltbild einer zweiten Ausführungsform der Erfindung mit einer Sorptionswärmepumpe nach Fig. 1.

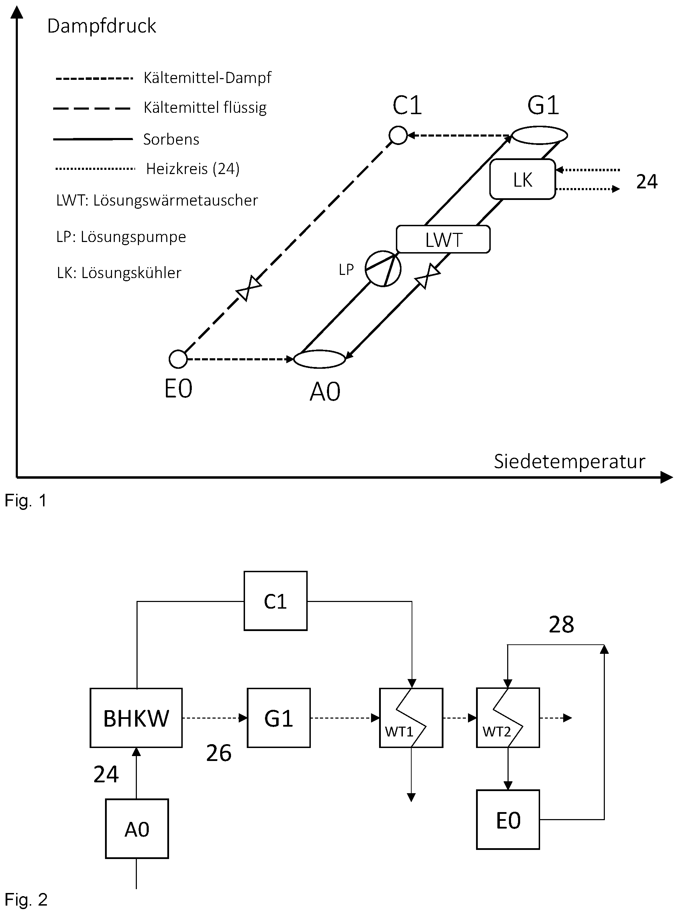

Fig. 1 zeigt eine einstufige Sorptionswärmepumpe, wie sie bei der vorliegenden Erfindung zum Einsatz kommt. Die Sorptionswärmpumpe umfasst einen Absorber A0, der über eine erste Flüssigkeitsleitung mit Lösungspumpe LP und über eine zweite Flüssigkeitsleitung mit Drossel mit dem Generator G1 verbunden ist. Durch den Kältemitteldampf aus dem ersten Verdampfer E0 wird die über die zweite Flüssigkeitsleitung in den ersten Absorber A0 gelangte kältemittelarme Lösung mit Kältemittel unter Abgabe von Wärme angereichert. Die kältemittelreiche Lösung wird über die erste Flüssigkeitsleitung und der Pumpe LP in den Generator G1 gepumpt. Im Generator G1 wird durch die Antriebswärme Kältemitteldampf aus der kältemittelreichen Lösung ausgetrieben. Der im Generator G1 ausgetriebene Kältemitteldampf wird in einem Kondensator C1 kondensiert und das flüssige Kältemittel wird über eine Drossel dem Verdampfer E0 zugeführt. Im Verdampfer E0 wird das flüssige Kältemittel durch Aufnahme von Wärme verdampft, wodurch der Kreislauf in der Sorptionswärmepumpe geschlossen ist. Zudem zeigt Fig. 1 den Einsatz eines Lösungskühlers LK in einer bevorzugten Ausführungsform. Der Lösungskühler LK kühlt die Lösung am Austritt vom Generator zum Absorber und koppelt die Wärme in den Heizkreis 24 ein.

Fig. 2 zeigt eine erste Ausführungsform der Erfindung mit einer Sorptionswärmepumpe nach Fig. 1. Die Wärmequellen auf unterschiedlichem Temperaturniveau werden durch ein Blockheizkraftwerk BHKW bereitgestellt. Die Abwärme des BHKW im Kühlwasser wird zusammen mit der Wärme aus dem Kondensator C1 und dem Absorber A0 in einen Heizkreis 24 als Nutzwärme eingekoppelt. Angetrieben wird die Sorptionswärmepumpe durch den Generator G1 durch die Nutzung der im Abgas 26 enthaltenen sensiblen Wärme. Dem im Generator G1 abgekühlten Abgasstrom 26 wird im ersten Wärmetauscher WT1 weiter sensible Wärme entzogen, die in den Heizkreis 24 eingekoppelt wird. Der weiter abgekühlte Abgasstrom 26 aus dem ersten Wärmetauscher WT1 wird in einem zweiten Wärmetauscher WT2 weiter abgekühlt. Der zweite Wärmetauscher WT2 ist als Rauchgaskondensator ausgelegt, so dass dem Abgasstrom sensible und latente Wärme entzogen wird. Der Verdampfer E0 und der Wärmetauscher WT2 sind zu diesem Zweck durch einen hydraulischen Kreis bzw. Kaltwasserkreis 28 miteinander verbunden. Die durch den Generator G1 und Verdampfer E0 aufgenommene Wärme wird durch den Kondensator C1 und den Absorber A0 an den Heizkreis 24 abgegeben.

Die Wärmetauscherflächen im Generator G1 sind so gewählt, dass der Wärmeeintrag in den Generator G1 durch den Abgasstrom 26 so groß ist, dass die Menge an Kältemittel durch den Generator G1 bereitgestellt wird, die im Verdampfer E0 dafür benötigt wird, den Brennwert des Abgasstroms 26 im zweiten Wärmetauscher WT2 zu nutzen. Die Verdampferleistung kann mittels Kondensatrückführung, wie sie aus der DE102018217935A1 oder der EP1391668A2 bekannt ist und/oder durch einen Lösungskühler bedarfsgerecht eingestellt werden.

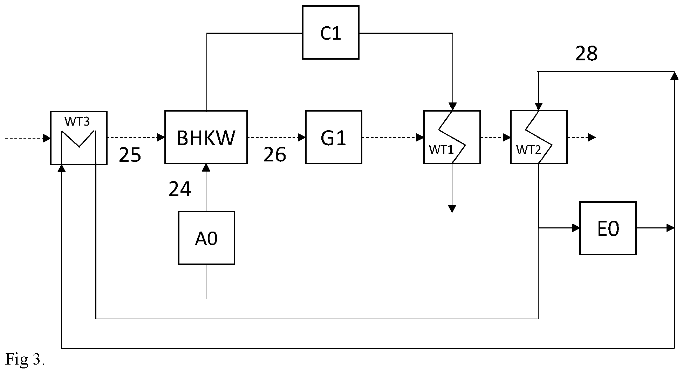

Fig. 3 zeigt eine zweite Ausführungsform der Erfindung, die sich von der Ausführungsform nach Fig. 2 dadurch unterscheidet, dass eine dritte Abwärmequelle des BHKW genutzt wird. Es wird der Gemischkühler des BHKW als dritter Wärmetauscher WT3 genutzt. Die durch den dritten Wärmetauscher WT3 aufgenommene Wärme wird in den Verdampfer E0 eingekoppelt. Dadurch erhöht sich die Nutzwärme weiter. Analog zur Ausführungsform nach Fig. 2 kann auch bei der Ausführungsform nach Fig. 3 die Verdampferleistung der Verdampfereinrichtung E0 mittels Kondensatrückführung und/oder Lösungskühler LK nachgeregelt werden.

Wenn in dieser Anmeldung Absorber A0 genannt sind, sind darunter auch Adsorber zu verstehen, d. h. es kann auch eine Sorptionswärmepumpe/-kältemaschine mit einem Feststoff als Sorptionsmittel eingesetzt werden.

Bezeichnungsliste
- G1: Generator
- C1: Kondensator
- A0: Absorber/Adsorber einstufige Sorptionswärmepumpe
- E0: Verdampfer, einstufige Sorptionswärmepumpe
- WT1: erste Wärmetauscheinrichtung
- WT2: zweite Wärmetauscheinrichtung (geeigneten für Abgaskondensation)
- WT3: dritte Wärmetauscheinrichtung
- LP: Lösungspumpe
- LWT: Lösungswärmetauscher
- LK: Lösungskühler

- 24: Heizkreis
- 25: Verbrennungsluft-Brennstoffgemisch-Massenstrom
- 26: Abgasstrom
- 28: Kaltwasserkreis

## Patentansprüche

1. Wärmetauschvorrichtung zur Nutzung von Wärmequellen mit unterschiedlichen Temperaturniveaus und zur Bereitstellung von Nutzwärme auf einem bestimmten Temperaturniveau, mit
einer Sorptionswärmepumpe, die
eine Generatoreinrichtung (G1) zum Austreiben von Kältemittel aus einem Sorptionsmittel,
eine Sorptionseinrichtung (A0) zur Aufnahme von Kältemittel in das Sorptionsmittel,
eine Kondensatoreinrichtung (C1) zur Kondensation des dampfförmigen Kältemittels, und
eine Verdampfereinrichtung (E0) zur Verdampfung des flüssigen Kältemittels, aufweist,
einer Antriebseinrichtung zum Einkoppeln von Antriebswärme über Wärmeübertragerflächen in die Generatoreinrichtung (G1) aus einer ersten Wärmequelle (Q1) in Form eines Wasserdampf enthaltenden Abgasstroms (26),
einem Heizkreis (24) zur Aufnahme von Wärme aus der Kondensatoreinrichtung (C1), aus der Sorptionseinrichtung (A0) und aus einer zweiten Wärmequelle (Q2), einer ersten Wärmetauscheinrichtung (WT1) zum Einkoppeln von Wärme aus dem Abgasstrom (26) in den Heizkreis (24),
einer zweiten Wärmetauscheinrichtung (WT2) zum Einkoppeln von sensibler und latenter Wärme aus dem Abgasstrom (26) in die Verdampfereinrichtung (E0), wobei die Wärmeübertragerflächen in der Generatoreinrichtung (G1) so ausgelegt sind, dass der Verdampfer (E0) die im Abgasstrom (26) enthaltene latente Wärme aufnehmen kann, und
einer Steuereinrichtung zum Justieren der Verdampferleistung der Verdampfereinrichtung (E0).

2. Wärmetauschvorrichtung nach Anspruch 1, **dadurch gekennzeichnet, dass** die Steuereinrichtung zum Justieren der Verdampferleistung der ersten Verdampfereinrichtung (E0)
eine Kondensatrückführung von der Kondensatoreinrichtung (C1) in die Generatoreinrichtung (G1) und/oder in die Sorptionseinrichtung (A0) und/oder eine Kondensatrückführung von flüssigem Kältemittel aus der Verdampfereinrichtung (E0) in die Sorptionseinrichtung (A0) und/oder
einen Lösungskühler (LK) zum Kühlen der Lösung der Generatoreinrichtung (G1) gegen den Heizkreis (24)
umfasst.

3. Wärmetauschvorrichtung nach einem der vorhergehenden Ansprüche, **dadurch gekennzeichnet,**
**dass** die erste Wärmetauscheinrichtung (WT1) der Generatoreinrichtung (G1) nachgeschaltet ist,
**dass** die zweite Wärmetauscheinrichtung (WT2) der ersten Wärmetauscheinrichtung (WT1) nachgeschaltet ist, und
**dass** im Heizkreis (24) die erste Wärmetauscheinrichtung (WT1) und die Wärme abgebenden Kondensator- und Sorptionseinrichtungen und die zweite Wärmequelle (C1, A0, Q2) in Reihe geschaltet sind.

4. Wärmetauschvorrichtung nach einem der vorhergehenden Ansprüche, **gekennzeichnet durch** eine dritte Wärmetauscheinrichtung (WT3) zum Einkoppeln von Wärme aus einer dritten Wärmequelle (Q3) in die Verdampfereinrichtung (E0) und **dadurch gekennzeichnet, dass** die Wärmeübertragerflächen in der Generatoreinrichtung (G1) so ausgelegt sind, dass der Verdampfer (E0) zusätzlich die Wärme aus der dritten Wärmequelle (Q3) aufnehmen kann.

5. Wärmetauschvorrichtung nach einem der vorhergehenden Ansprüche **dadurch gekennzeichnet, dass** die Wärmeübertragerflächen in der Generatoreinrichtung (G1) so ausgelegt sind, dass die Generatoreinrichtung (G1) die im Abgas noch verbleibende Antriebswärme ganz oder teilweise aufnehmen kann.

6. Wärmetauschvorrichtung nach Anspruch 4 oder 5, **dadurch gekennzeichnet, dass** die dritte Wärmetauscheinrichtung (WT3) ein Gemischkühler eines Blockheizkraftwerkes (BHKW) ist.

7. Wärmetauschvorrichtung nach einem der vorhergehenden Ansprüche, **dadurch gekennzeichnet, dass** die erste Wärmequelle (Q1) der Abgasstrom (26) aus einem Blockheizkraftwerk (BHKW) ist.

8. Wärmetauschvorrichtung nach Anspruch nach einem der vorhergehenden Ansprüche, **dadurch gekennzeichnet, dass** die zweite Wärmequelle (Q2) das Motorkühlwasser eines Blockheizkraftwerks (BHKW) ist.
